## Europäisches Patentamt
## European Patent Office
## Office européen des brevets

(11) Publication number: **0 007 740**
**B1**

(12)

# EUROPEAN PATENT SPECIFICATION

(45) Date of publication of patent specification: **14.04.82**

(51) Int. Cl.³: **G 01 N 3/30**, G 01 N 3/08

(21) Application number: **79301353.3**

(22) Date of filing: **10.07.79**

(54) **A single-axis or multi-axial apparatus for dynamic tests on large structures.**

<table>
<tr><td>

(30) Priority: **11.07.78 IT 5024878**

(43) Date of publication of application:
**06.02.80 Bulletin 80/3**

(45) Publication of the grant of the patent:
**14.04.82 Bulletin 82/15**

(84) Designated Contracting States:
**BE CH DE FR GB LU NL SE**

(56) References cited:
**FR - A - 2 194 965**
**FR - A - 2 229 967**
**FR - A - 2 308 927**
**FR - B - 2 173 575**
**US - A - 3 270 556**
**US - A - 3 407 651**

**MATERIALS TESTING, vol. 18, no. 4, April 1976, Düsseldorf DE H. WINKLER: "Testing machine for triaxial strength studies on concrete specimens", pages 127—133**

**WELDING JOURNAL, vol. 27, no. 11, November 1948, Miami, USA G. WELTER "Two new methods for testing triaxial specimens", pages 529 to 536**

</td><td>

(73) Proprietor: **EUROPEAN ATOMIC ENERGY COMMUNITY (EURATOM)**
**Bâtiment Jean Monnet Plateau du Kirchberg P.O. Box 1907**
**Luxembourg (LU)**

(72) Inventor: **Albertini, Carlo**
**via dei Pini 7**
**Ispra (IT)**
Inventor: **Buzzi, Umberto**
**via Verdi 6**
**Angera (IT)**
Inventor: **Gritzmann, Peter**
**via G. Besozzi 25**
**Sangiano (IT)**
Inventor: **Montagnani, Mario**
**via Rossi 5**
**Bologna (IT)**

(74) Representative: **Baverstock, Michael George Douglas et al,**
**BOULT, WADE & TENNANT, 27 Furnival Street London, EC4A 1PQ (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A single-axis or multi-axial apparatus for dynamic tests on large structures.

The present invention relates to apparatus for performing single-axis or multi-axial dynamic tests on large structures.

The constituent dynamic equations are a very important parameter in the study of incidents in nuclear reactors and dynamically stressed structures in general. A knowledge of these equations is essential not only for homogeneous materials, such as steel, but also for composite structures such as a section of the reactor core or a reinforced concrete structure. A homogeneous material can be studied in small test-pieces, whereas in order to study a composite structure or material, it is necessary to have a relatively large cross-section in order to represent the entire material, which can then be considered as homogeneous.

In order to analyze the data and apply them to actual situations, it is also necessary to know the constituent equation under conditions of combined forces or with a stepped load diagram.

Test apparatus exist for the first case (see Italian Patent Specification No. 985 074 dated 16th May 1973), but for the second case there are no known apparatuses which are adequate to perform tests requiring heavy loads, rapid application of the load, and a long duration of loading under conditions where the force of the load is closely controlled. The apparatus described in the afore-mentioned patent is not suitable for direct application to heavy loads since the device for release of the load comprises a fragile intermediate member and it has prohibitive dimensions. Furthermore, since the loads in question are large, special precautions are necessary with regard to the safety of the installation during testing e.g. in the case of the hydraulic jack for tensioning the cable and the braking means (e.g. a shock absorber) for preventing the cable from being compressed.

To obviate the afore-mentioned limitations, the present invention provides a novel apparatus for studying the behaviour of materials with continually increasing stages of stress, and for investigating the strain hardening of materials due to successive plastic deformation thereof, with particular regard to the dynamics of large structures under heavy, rapidly changing loads.

As far as the prior art is concerned, the patent FR—A—2229967 describes an apparatus for performing single-axis tensile dynamic tests on relatively small test-pieces, the apparatus comprising a loading rod for applying a force to the test-piece during the test, a mechanical jack for tensioning the rod secured at one end thereof, a structure for securing the rod, and a stopping and releasing device secured at the other end of the loading rod, propagating a load wave to the test-piece after the release mechanism in the device has been actuated. The patent FR—A—2308927 discloses an apparatus for performing single-axis or multi-axial dynamic tests on relatively small test-pieces, which apparatus comprises means for applying a force to a single-axis or multi-axial test-piece, either in tension or in compression for each stress test axis, and a structure for securing the said means. The disclosed apparatuses are, however, suitable only for relatively small loads, e.g. up to five tonnes, and cannot readily be modified for applying loads of several hundred tonnes. Furthermore, the known prior art does not provide means for synchronized and stepped release of the load on a test-piece.

According to the main feature of the invention the proposed apparatus comprises a loading cable for applying a force to the test-piece along a stress axis to be tested, either in tension or in compression, a hydraulic jack for tensioning the cable, an anchoring structure for securing the cable relative to the test-piece, a stopping and release device for securing the cable for anchoring structure before the test and for propagating a load wave to the test-piece during the test, characterised in that the apparatus is adapted to test large structures with loading forces of at least two hundred tonnes, and in that the apparatus includes a recoil shock-absorber for the cable, and at least one intermediate securing means for limiting lateral oscillations of the cable and for releasably securing the cable along its length to the anchoring structure.

According to another feature of an embodiment of the invention, the anchoring structure comprises a bunker and a tubular, reinforced-concrete structure which operates under compression, and which is integral with the bunker.

According to a further feature of an embodiment of the invention the device for stopping and releasing the cable under tension comprises explosive bolts with electric detonators synchronized to a microsecond.

According to another feature of an embodiment of the invention, the recoil shock-absorber comprises a plurality of springs disposed in series and/or in parallel.

On embodiment of an apparatus according to the present specification is illustrated in the accompanying drawings, in which:—

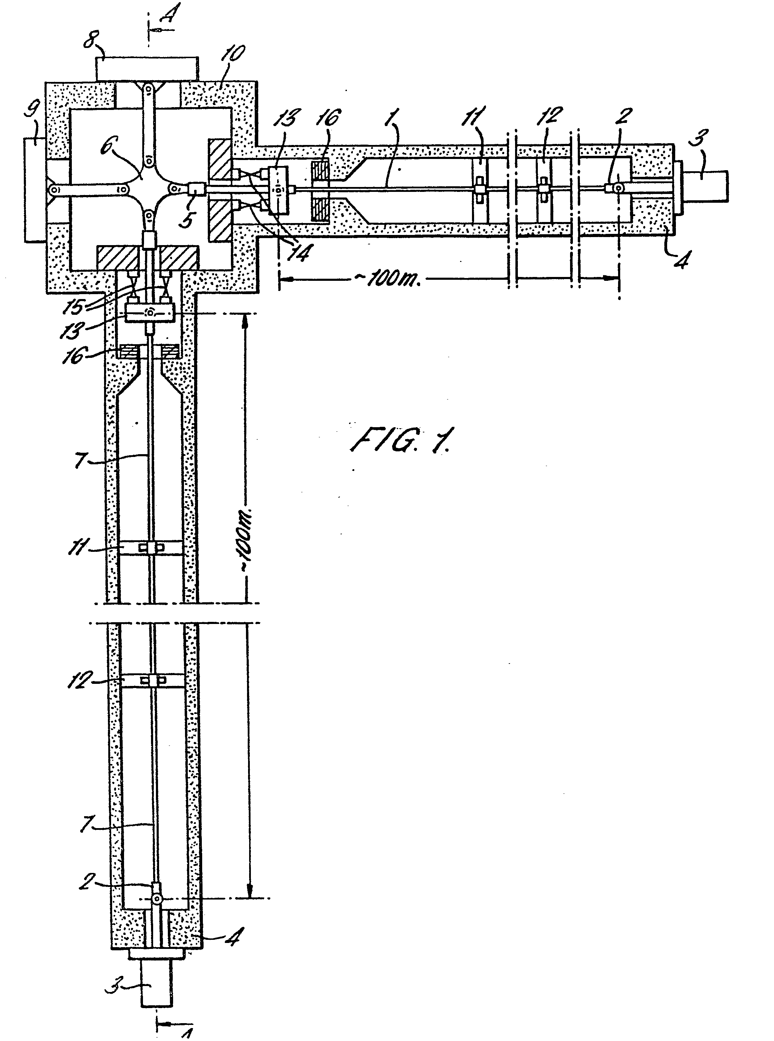

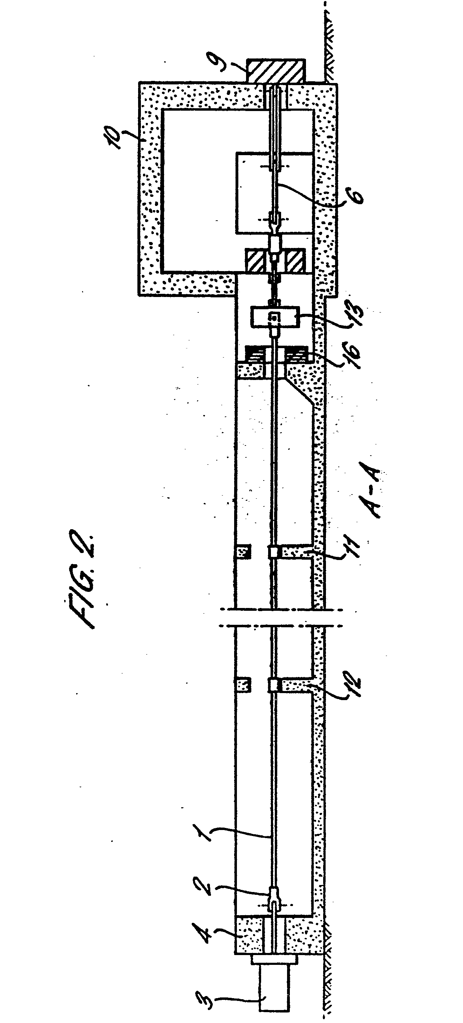

Figure 1 is a general view of a biaxial embodiment of the apparatus and Figure 2 is a sectional, side view taken along the line AA of Figure 1.

Figure 1 shows a steel cable 1, acting as an energy accumulator, secured at one end 2 by a hydraulic jack 3 to a tubular reinforced-concrete anchoring structure 4. The other end 5 is mechanically connected to a large structure 6 to be tested which, in the biaxial embodiment, is connected to another cable 7 at right angles to cable 1 and is secured by retaining means 8, 9 to an anchoring bunker 10. In the case of triaxial tests, there will be three cables and three retaining means for securing to the bunker.

In another embodiment of the present apparatus, a double cable is provided for each direction of force and holds the test-structure 6 at either end (cruciform embodiment).

In the biaxial embodiment, cable 1 is held horizontal and secured by intermediate cable securing means 11, 12 disposed along its entire length (e.g. 100 m) at discrete intervals. A cable-stopping and release mechanism 13 is disposed at the bunker end of the cable and comprises two electrically synchronized explosive bolts 14, 15 and a recoil shock-absorber 16 made up of springs in series and/or in parallel.

Figure 2 is a sectional, side view of the apparatus of Figure 1 taken along the line AA of Figure 1. Like elements bear like numbers.

The loading cable 1 is relatively long, to provide a long-duration tension pulse. A suitable device for applying a load to the test-structure is used for tensile and compression testing. The cable is dimensioned so that it can easily reach a permissible load of several hundred tonnes, by taking advantage of the fact that the cable is made up of relatively thin wires which can bear high permitted loads.

The hydraulic jack 3 is required for tensioning the cable. The anchoring structure 4 bearing the axial force can comprise a tubular structure running the length of the cable and operating under compression, or two discrete securing means at the ends of the cable. The stopping and release device 13, which holds the end of the cable before the test, can propagate a load wave to the test-structure secured at the end of the cable, after the explosive bolts 14, 15 have been fired.

Release is obtained by exploding electric detonators placed in a recess inside each explosive bolt of the device 13, the detonators being electrically synchronized to a microsecond.

Owing to the large amount of energy that is involved, there may be danger to people or property if the cable is release completely, followed by a whiplash when the cable changes from a state of tension to a state of compression (in such cases the cable, which has just operated with a load at its end, bends rapidly sideways).

The recoil shock-absorber 16, made up of sets of springs in series and/or in parallel, prevents the cable from changing over to the state of compression, and thus damps down the stresses which are continuously reflected after impact against the shock-absorber.

Additional protection against a whiplash is provided by the intermediate securing means 11, 12 which limit the lateral motion of the cable. The stress axes can be parallel (shear forces) or variously inclined or at right angles or in different planes which may or may not be at right angles, so that a variety of stresses can be applied to the large structure under test.

A further or alternative device for applying a load to the test-structure can comprise explosive charges synchronized with the action of the or each cable.

The protective bunker, which is the main stationary part of the present apparatus, is an element common to all axes.

The intermediate means for securing the cable all the way along its length can be used for applying successive degrees of force when stressing the structure under test, the duration of the force being proportional to the length of the cable portions which are progressively released from the securing means.

The present apparatus can be used to study the behaviour of materials under continuously increasing states of stress, or more particularly for investigating strain hardening due to successive plastic deformation, or for studying relaxation phenomena.

## Claims

1. An apparatus for performing single-axis or multi-axial dynamic tests on a test piece, which apparatus comprises a loading cable (1, 7) for applying a force to the test-piece (6) along a stress axis to be tested, either in tension or in compression, a hydraulic jack (3) for tensioning the cable (1, 7), an anchoring structure (4, 10) for securing the cable (1, 7) relative to the test-piece (6), a stopping and release device (13) for securing the cable (1, 7) to the anchoring structure (4, 10) before the test and for propagating a load wave to the test-piece (6) during the test, characterised in that the apparatus is adapted to test large structures with loading forces of at least two hundred tonnes, and in that the apparatus includes a recoil shock-absorber (16) for the cable (1, 7), and at least one intermediate securing means (11, 12) for limiting lateral oscillations of the cable (1, 7) and for releasably securing the cable (1, 7) along its length to the anchoring structure (4, 10).

2. An apparatus as claimed in claim 1 characterised in that the anchoring structure (4, 10) comprises a bunker (10) and a tubular, reinforced-concrete structure (4) which operates under compression, and which is integral with the bunker (10).

3. An apparatus as claimed in any one of the preceding claims characterised in that the device (13) for stopping and releasing the cable (1, 7) under tension comprises explosive bolts (14, 15) with electric detonators synchronized to a microsecond.

4. An apparatus as claimed in any one of the preceding claims characterised in that the recoil shock-absorber (16) comprises a plurality of springs disposed in series and/or in parallel.

## Revendications

1. Machine monoaxiale ou multiaxiale d'essais en dynamique d'un échantillon, ladite machine comprenant un câble de charge (1, 7) destiné à appliquer une force à l'échantillon (6) le long d'un axe de contrainte à essayer, soit en tension, soit en compression, un vérin hydraulique (3) destiné à mettre le câble (1, 7) sous tension, une structure d'ancorage (4,10) destinée à fixer le câble (1, 7) par rapport à l'échantillon (6), un dispositif d'arrêt et de libération (13) destiné à fixer le câble (1, 7) à la structure d'ancrage (4, 10) avant l'essai et à assurer la propagation d'une onde de charge vers l'echantillon (6) pendant l'essai caractérisée en ce qu'elle est adaptée á l'essai de grandes structures avec des forces correspondant à des charges d'au moins 200 tonnes (2.10⁶ N), et en ce que la machine comporte un amortisseur à recul (16) pour le câble (1, 7) et au moins un dispositif intermédiaire de fixation (11, 12) destiné à limiter les oscillations latérales du câble (1, 7) et a fixer le câble (1, 7) de manière amovible suivant sa longueur au dispositif d'ancrage (4, 10).

2. Machine selon la revendication 1, caractérisée en ce que la structure d'ancrage (4, 10) comporte une soute (10) et une structure tubulaire (4) de béton armé qui travaille en compression et qui est solidaire de la soute (10).

3. Machine selon l'une quelconque des revendications précédentes, caractérisée en ce que le dispositif (13) d'arrêt et de libération du câble (1, 7) sous tension comporte des boulons explosifs (14, 15) avec des détonateurs électriques synchronisés à une microseconde.

4. Machine selon l'une quelconque des revendications précédentes, caractérisé en ce que l'amortisseur à recul (16) comprend plusieurs ressorts disposés en série et/ou en parallèle.

**Patentansprüche**

1. Monoaxiales oder multiaxiales Testgerät zum dynamischen Testen eines Testobjekts mit einem Belastungsseil (1, 7) zum Aufbringen einer Kraft entweder in Zug- oder Druckrichtung auf das Testobjekt (6) längs einer zu untersuchenden Belastungsachse, einer hydraulischen Spannvorrichtung (3) zum Spannen des Seils (1, 7), einem Verankerungsrahmen (4, 10) zum Festlegen des Seils (1, 7) gegenüber dem Testobjekt (6), einer Halte- und Freigabevorrichtung (13) zum Befestigen des Seils (1, 7) an dem Verankerungsrahmen (4, 10) vor dem Test und zum Fortleiten einer Belastungswelle zum Testobjekt (6) während des Tests, dadurch gekennzeichnet, daß das Gerät zum Testen großer Struckturen mit Lastkräften von wenigstens 200 t eingerichtet ist und daß das Gerät einen Rückschlagdämpfer (16) für das Seil (1,7) und wenigstens eine Zwischensicherungseinrichtung (11, 12) zum Begrenzen von Seitenschwingungen des Seils (1, 2) und zum lösbaren Sichern des Seils (1, 7) längs seiner Länge an dem Verankerungsrahmen (4, 10) aufweist.

2. Gerät nach Anspruch 1, dadurch gekennzeichnet, daß der Verankerungsrahmen (4, 10) aus einem Bunker (10) und einem Rohr (4) aus bewehrtem Beton, das auf Druck beansprucht ist und mit dem Bunker (10) integral verbunden ist, besteht.

3. Gerät nach einem der vorhergehenden Ansprüche, dadurch gekennzeichnet, daß die Halte- und Freigabevorrichtung (13) für das unter Zug stehende Seil (1, 7) aus Explosivbolzen (14, 15) mit elektrischen Detonatoren, deren Zündung innerhalb einer Mikrosekunde synchronisiert ist, besteht.

4. Gerät nach einem der vorhergehenden Ansprüche, dadurch gekennzeichnet, daß der Rückschlagdämpfer (16) eine Mehrzahl von Federn aufweist, die wirkungsmäßig hintereinander und/oder parallel geschaltet sind.

0 007 740

FIG. 1.

FIG. 2.

A-A